# EUROPEAN PATENT SPECIFICATION

(11) **EP 1 025 185 B1**
(45) Date of publication and mention of the grant of the patent: **07.04.2004**
(21) Application number: 98944073.0
(22) Date of filing: 21.09.1998
(51) Int. Cl.: C09K 21/04, C09K 21/06, C09K 21/14, B32B 17/06, C08K 3/00

(54) **FIRE RESISTANT LAMINATES**
NICHTBRENNBARER VERBUNDSCHICHTSTOFF
STRATIFIE RESISTANT AU FEU

(30) Priority: 23.09.1997 GB 9720092
(43) Date of publication of application: 09.08.2000
(73) Proprietor: PILKINGTON PLC, St. Helens, Merseyside WA10 3TT (GB)
(72) Inventor: HOLLAND, John, Richard, Rufford, Lancashire L40 1TN (GB); HOLDEN, David, William, Wigan, Greater Manchester WN5 8NY (GB); VARMA, Karikath Sukumar, Southport, Merseyside PR8 1PW (GB)
(74) Representative: Halliwell, Anthony Charles
(86) International application number: PCT/GB1998/002854
(87) International publication number: WO 1999/015604

(56) References cited:
- EP-A- 0 703 067
- US-A- 4 529 467
- US-A- 4 707 304

## Description

The invention relates generally to fire resistant laminates and in particular to intumescent interlayer materials for such laminates. Fire resistant laminated glazings are known which comprise two or more sheets of glass bonded together by interlayers of a material that intumesces when exposed to fire, that is, it expands so as to provide a heat barrier whilst holding the sheets together thereby maintaining the integrity of the laminate and preventing the spread of flames and smoke.

The applicants and their subsidiary companies currently produce a range of fire resistant laminated glazings which are marketed under the trade names PYRODUR and PYROSTOP. The basic PYRODUR laminate comprises two sheets of glass bonded together with an interlayer of sodium silicate, and is made by pouring a sodium silicate solution on to one of the sheets of glass, drying the solution and laminating a second sheet over the top. Further detail on the production of PYRODUR-type laminates is disclosed in GB-A-1585125.

Whilst PYRODUR laminates and their PYROSTOP derivatives perform excellently and have been commercially successful, there is scope for a fire resistant laminated glazing which is simple, and hence relatively inexpensive, to fabricate. One way of keeping the fabrication process simple would be to make use of the conventional cast-in-place laminating technique. This is commonly used for making laminated architectural glazings and involves holding two sheets of glass together at their edges, usually with an adhesive tape, so as to form a cell which may be filled with a curable interlayer material, for example an epoxy resin. However, there are difficulties associated with producing sodium silicate interlayers by the cast-in-place route, most notably the need to remove in the region of 50% of the water from the sodium silicate solution. Consequently, to make straightforward use of the cast-in-place technique, an alternative intumescent interlayer material would be preferable.

The invention provides a castable liquid intumescent material for fire resistant laminate interlayers comprising a metal phosphate, a char forming component and a binding agent.

Preferably, the metal phosphate comprises a water soluble glass forming metal phosphate. Zinc, aluminium, magnesium, tin, titanium or calcium phosphate are examples of such phosphates, although zinc phosphate is preferred. The char forming component, which dehydrates when heated to form a solid carbon residue, is also preferably soluble. The phosphate and char forming component solutions can therefore be mixed together to form an easily castable liquid. The binding agent is required in order to gel the mixed solution once cast.

In use, the inorganic component of the material, that is the phosphate, is supported by the carbon residue and, in turn, the phosphate protects the carbon residue. The advantage of having a glass forming metal phosphate is that it melts when heated and flows over the carbon residue so as to protect it from oxidation. The greater the concentration of the phosphate solution, the greater the protection afforded.

Further preferably, the phosphate may be a mixed metal phosphate. A first additional metal in the phosphate may be an alkali metal, such as lithium or potassium, which serves to lower the temperature at which the phosphate melts to form a glass. Hence, in use, the alkali metal lowers the temperature at which the glass is able to offer protection for the carbon residue. A second additional metal in the phosphate may be a multivalent metal, such as aluminium calcium or magnesium, which serves to increase the viscosity of the glass formed from the phosphate. In a laminate, viscosity is required in order to reduce the tendency of the interlayer material to flow and amass at the bottom of the laminate. The additional metals are preferably added as chlorides, wherein the metal phosphate forms a chlorophosphate. The presence of the chloride has been found to significantly increase solubility.

The char forming component is preferably sorbitol. A number of other carbohydrates, particularly sugars, have been tried but only sorbitol appeared to be sufficiently soluble in a significant quantity.

The binding agent is preferably a polymer. Acrylamide has been found to be readily compatible with phosphate solutions. The polymer is preferably UV cured, in which case the material further comprises a photoinitiator, but could be heat cured. Suitable photoinitiators are available in the UK from the Ciba-Geigy company under the designations Darocure 4263 or Darocure 1173.

In addition, improved results have been obtained by adding a cross-linking agent which reduces the amount of polymer needed to bind the interlayer without significantly reducing its strength and controls the degree of intumescence. Intumescence can be reduced from about 1000% to 100%, and can be controlled by altering the concentration of cross-linking agent. By limiting intumescence, the stability of the laminate in use can be controlled. N,N'-methylenebisacrylamide, cyanuric acid-triglycidyl ether and ethylene glycol dimethacrylate are all effective cross-linking agents, although N,N'-methylenebisacrylamide appears most compatible.

It is known that the presence of boron oxide forming compounds in an intumescent interlayer improves the adhesion between carbon residue and glass. Hence, if the material is to be used as an interlayer between sheets of glass, boric acid may be added. This appears to heighten fire performance by improving interlayer adhesion and to prevent cracking. However, the addition of more than a small amount of boric acid is only possible in the presence of sorbitol.

Furthermore, the adhesion of the material to glass may be improved by coating the glass with hydrolysed methacryl functionalised organosilane, baking the glass and exposing it to UV radiation.

The material may be used as an interlayer between sheets of sodium silicate glass, which may be annealed, toughened or laminated, or borosilicate glass. Typically the interlayer will be between 0.5 mm and 15 mm thick. The material may be used as an interlayer between fire resistant laminates with sodium silicate interlayers, thereby forming a hybrid fire resistant laminate. The performance of the hybrids is much better than would be expected, that is there appears to be a synergistic effect, because the material according to the invention, as well as acting as an intumescent, appears to reduce water loss from the sodium silicate and thereby prolongs its fire resistance. Also of benefit to its use in fire resistant laminated glazing is the material's low flammability. Certain countries. for example Japan, have very strict regulations concerning the flammability of fire resistant interlayers.

The invention will now be described, by way of example, with reference to the drawings, in which:
Figure 1 is a side view, shown partially in section, of a two-glass-sheet fire resistant laminated glazing including an interlayer material according to the invention; and
Figure 2 is a side view, shown partially in section, of a four-glass-sheet, hybrid fire resistant laminated glazing including an interlayer material according to the invention.

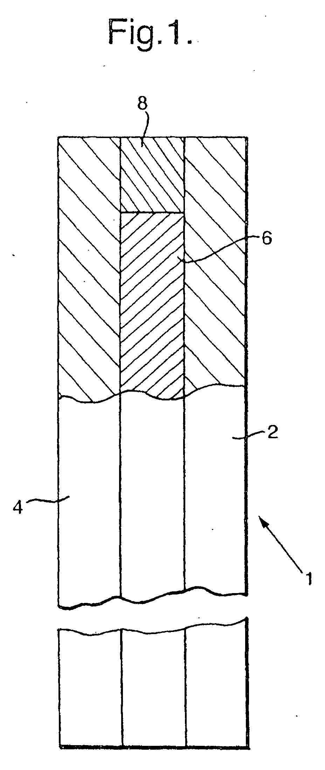

With reference to figure 1, a fire resistant laminated glazing indicated generally at 1 has two sheets of silane coated, 3 mm thick sodium silicate float glass 2, 4, each 500 mm x 750 mm, which are separated by a 3 mm thick intumescent interlayer 6 of the following formulation:

| | |
|---|---|
| 86% Mixed phosphate [ZnK_{0.5}Mg_{0.25}(H₂PO₄).HCl] solution | 70 parts |
| 85% Sorbitol solution | 20 parts |
| Boric acid | 10 parts |
| 60% Acrylamide solution* | 10 parts |

| | |
|---|---|
| * 2% of solution was N,N'-methylenebisacrylamide cross-linking agent and 0.05% is Darocure 1173 photoinitiator. | |

The formulation was made as follows:

Phosphoric acid was placed in a flask, maintained at 80°C to 100°C, and zinc oxide added with the acid refluxing gently until fully dissolved. The solution was cooled and potassium chloride was added, followed by magnesium chloride. Sorbitol was dissolved at 90°C at a concentration of 85% in water. The full amount of boric acid was added to the sorbitol solution. The sorbitol solution was mixed with the phosphate solution at 70°C. Acrylamide was dissolved in water together with the requisite amount of N,N'-methylenebisacrylamide and Darocure 1173 (added as 10% methanolic solution) to form 60% (w/w) solution. The phosphate and acrylamide solutions were rapidly mixed, and extra water added.

The laminate 1 was made by bonding the two sheets 2, 4 together around their edges with a foamed polyurethane tape 8 so as to form a cell between the two sheets 2, 4. A small gap (not shown) was left in the tape 8 so as to enable the cell to be filled with the liquid intumescent material. The liquid intumescent is pumped into the cell after having been degassed by heating it to 50°C. Once the cell was filled, the gap was sealed with hot melt adhesive. The intumescent material was then gelled in situ by curing the acrylamide. To do this, the laminate was exposed to UV radiation.

The laminate was tested on an electric furnace, following the fire test curve set out in British Standard BS 476. The laminate retained its integrity for in excess of 60 minutes, at a temperature of 925°C. The interlayer formed a hard charred mass with no more than 100% intumescence.

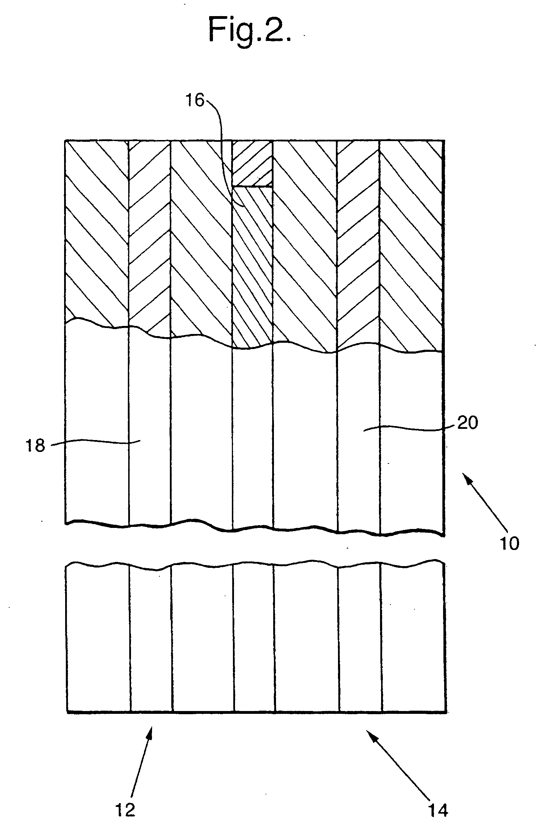

With reference to figure 2, a hybrid fire resistant laminated glazing 10 was made up from two of the applicants PYRODUR fire resistant laminated glasses 12, 14 separated by an interlayer 16 of the same formulation as described with reference to figure 1. Each of the PYRODUR glasses 12, 14 was 15 mm thick and had a 3 mm interlayer 18, 20 of sodium silicate. The interlayer 16 between the PYRODUR glasses was 3 mm thick and the laminate 10 was 1 m x 1 m. The laminate 10 was tested and accredited with an insulation value (F) of 89 minutes and an integrity value (G) of 105 minutes.

## Claims

1. A castable liquid intumescent material for fire resistant laminate interlayers comprising a metal phosphate, a char forming component and a binding agent.

2. An intumescent material according to claim I wherein the metal phosphate comprises a water-soluble glass forming metal phosphate.

3. An intumescent material according to claim 2 wherein the water soluble glass forming metal phosphate is zinc, aluminium, magnesium, tin, titanium or calcium phosphate.

4. An intumescent material according to any of claims 1 to 3 wherein the char forming component is water soluble.

5. An intumescent material according to any of claims 1 to 4 wherein the metal phosphate is a mixed metal phosphate.

6. An intumescent material according to claim 5 wherein the mixed metal phosphate comprises an alkali metal.

7. An intumescent material according to claim 6 wherein the alkali metal is lithium or potassium.

8. An intumescent material according to claim 5 wherein the mixed metal phosphate comprises a multivalent metal.

9. An intumescent material according to claim 8 wherein the multivalent metal is aluminium, calcium or magnesium.

10. An intumescent material according to claim 4 wherein the char forming component is sorbitol.

11. An intumescent material according to any preceding claim wherein the binding agent comprises a polymer.

12. An intumescent material according to claim 11 wherein the polymer is acrylamide.

13. An intumescent material according to claim I 1 or claim 12 wherein the polymer is UV cured and the binding agent comprises a photoinitiator.

14. An intumescent material according to claim 11 wherein the binding agent comprises a cross-linking agent.

15. An intumescent material according to claim 14 wherein the cross-linking agent comprises N,N'-methylenebisacrylamide, cyanuric acid-triglycidyl ether or ethylene glycol dimethacrylate.

16. An intumescent material according to any preceding claim comprising boric acid.

17. A fire resistant laminated glazing comprising sheet glazing materials separated by an interlayer of intumescent material according to any of claims 1 to 16.

18. A fire resistant laminated glazing according to claim 17 wherein the sheet glazing materials are coated with an adhesion promoter.

19. A fire resistant laminated glazing according to claim 18 wherein the adhesion promoter comprises silane.

20. A fire resistant laminated glazing according to claim 17 wherein one or more of the sheet glazing materials comprises a laminated fire resistant glazing.

21. A method of making a fire resistant laminated glazing according to claim 17 or claim 20 wherein the interlayer material is cast-in-place.

## Patentansprüche

1. Gießfähiges flüssiges schaumbildendes Material für feuerfeste Zwischenschichten von Schichtstoffen, aufweisend ein Metallphosphat, eine verkohlende Komponente und ein Bindemittel.

2. Schaumbildendes Material nach Anspruch 1, bei dem das Metallphosphat ein wasserlösliches glasbildendes Metallphosphat umfasst.

3. Schaumbildendes Material nach Anspruch 2, bei dem das wasserlösliche glasbildende Metallphosphat Zink-, Aluminium-, Magnesium-, Zinn-, Titan- oder Calciumphosphat ist.

4. Schaumbildendes Material nach einem der Ansprüche 1 bis 3, bei dem die verkohlende Komponente wasserlöslich ist.

5. Schaumbildendes Material nach einem der Ansprüche 1 bis 4, bei dem das Metallphosphat ein gemischtes Metallphosphat ist.

6. Schaumbildendes Material nach Anspruch 5, bei dem das gemischte Metallphosphat ein Alkalimetall umfasst.

7. Schaumbildendes Material nach Anspruch 6, bei dem das Alkalimetall Lithium oder Kalium ist.

8. Schaumbildendes Material nach Anspruch 5, bei dem das gemischte Metallphosphat ein mehrwertiges Metall aufweist.

9. Schaumbildendes Material nach Anspruch 8, bei dem das mehrwertige Metall Aluminium, Calcium oder Magnesium ist.

10. Schaumbildendes Material nach Anspruch 4, bei dem die verkohlende Komponente Sorbitol ist.

11. Schaumbildendes Material nach einem der vorhergehenden Ansprüche, bei dem das Bindemittel ein Polymer umfasst.

12. Schaumbildendes Material nach Anspruch 11, bei dem das Polymer Acrylamid ist.

13. Schaumbildendes Material nach Anspruch 11 oder Anspruch 12, bei dem das Polymer durch UV vernetzt wird und das Bindemittel einen Photoinitiator aufweist.

14. Schaumbildendes Material nach Anspruch 11, bei dem das Bindemittel ein vernetzendes Agens aufweist.

15. Schaumbildendes Material nach Anspruch 14, bei dem das vernetzende Agens N,N'-Methylenbisacrylamid, Cyanursäuretriglycidylether und Ethylenglykol-dimethacrylat umfaßt.

16. Schaumbildendes Material nach einem der vorhergehenden Ansprüche, das Borsäure aufweist.

17. Feuerfeste, laminierte Verglasung, aufweisend Scheiben aus Verglasungsmaterial, die durch eine Zwischenschicht aus schaumbildendem Material nach einem der Ansprüche 1 bis 16 getrennt sind.

18. Feuerfeste, laminierte Verglasung nach Anspruch 17, bei der die Scheiben aus Verglasungsmaterial mit einem Adhäsionsverstärker beschichtet sind.

19. Feuerfeste, laminierte Verglasung nach Anspruch 18, bei der der Adhäsionsverstärker Silan aufweist.

20. Feuerfeste, laminierte Verglasung nach Anspruch 17, bei der eine oder mehrere der Scheiben aus Verglasungsmaterial eine laminierte feuerfeste Verglasung aufweisen.

21. Verfahren zur Herstellung einer laminierten feuerfesten Verglasung nach Anspruch 17 oder Anspruch 20, bei dem das Zwischenschichtmaterial direkt gegossen wird.

## Revendications

1. Matière intumescente liquide pouvant être coulée pour couches intermédiaires de stratifié résistant au feu, comprenant un phosphate métallique, un composant formant un produit de carbonisation et un agent liant.

2. Matière intumescente selon la revendication 1, dans laquelle le phosphate métallique comprend un phosphate métallique vitrifiable hydrosoluble.

3. Matière intumescente selon la revendication 2, dans laquelle le phosphate métallique vitrifiable hydrosoluble est le phosphate de zinc, d'aluminium, de magnésium, d'étain, de titane ou de calcium.

4. Matière intumescente selon l'une quelconque des revendications 1 à 3, dans laquelle le composant formant un produit de carbonisation est hydrosoluble.

5. Matière intumescente selon l'une quelconque des revendications 1 à 4, dans laquelle le phosphate métallique est un phosphate métallique mixte.

6. Matière intumescente selon la revendication 5, dans laquelle le phosphate métallique mixte comprend un métal alcalin.

7. Matière intumescente selon la revendication 6, dans laquelle le métal alcalin est le lithium ou le potassium.

8. Matière intumescente selon la revendication 5, dans laquelle le phosphate métallique mixte comprend un métal polyvalent.

9. Matière intumescente selon la revendication 8, dans laquelle le métal polyvalent est l'aluminium, le calcium ou le magnésium.

10. Matière intumescente selon la revendication 4, dans laquelle le composant formant un produit de carbonisation est le sorbitol.

11. Matière intumescente selon l'une quelconque des revendications précédentes, dans laquelle l'agent liant comprend un polymère.

12. Matière intumescente selon la revendication 11, dans laquelle le polymère est un polymère d'acrylamide.

13. Matière intumescente selon la revendication 11 ou la revendication 12, dans laquelle le polymère est durci par irradiation UV et l'agent liant comprend un photo-initiateur.

14. Matière intumescente selon la revendication 11, dans laquelle l'agent liant comprend un agent de réticulation.

15. Matière intumescente selon la revendication 14, dans laquelle l'agent de réticulation comprend du N,N'-méthylènebisacrylamide, de l'éther triglycidylique d'acide cyanurique ou du diméthacrylate d'éthylèneglycol.

16. Matière intumescente selon l'une quelconque des revendications précédentes, comprenant de l'acide borique.

17. Vitrage stratifié résistant au feu, comprenant des matériaux de vitrage en feuille séparés par une couche intermédiaire de matière intumescente selon l'une quelconque des revendications 1 à 16.

18. Vitrage stratifié résistant au feu selon la revendication 17, dans lequel les matériaux de vitrage en feuille sont revêtus d'un promoteur d'adhérence.

19. Vitrage stratifié résistant au feu selon la revendication 18, dans lequel le promoteur d'adhérence comprend un silane.

20. Vitrage stratifié résistant au feu selon la revendication 17, dans lequel un ou plusieurs des matériaux de vitrage en feuille comprennent un vitrage stratifié résistant au feu.

21. Procédé de fabrication d'un vitrage stratifié résistant au feu selon la revendication 17 ou la revendication 20, dans lequel la matière de couche intermédiaire est coulée sur place.
